# DEMANDE DE BREVET EUROPEEN

(11) **EP 1 607 284 A1**
(43) Date de publication de la demande: **21.12.2005**
(21) Numéro de dépôt: 04014229.1
(22) Date de dépôt: 17.06.2004
(51) Int. Cl.: B60R 22/10

(54) **Harnais de securite pour animal quadrupede**

(71) Demandeur: Neuville, Raymond, 1081 Koekelberg (BE)
(72) Inventeur: Neuville, Raymond, 1081 Koekelberg (BE)

(57) **Abrégé**

Harnais de sécurité pour un animal quadrupède dans un véhicule, comprenant un collier (1), une ceinture ventrale (3) et une ceinture thoracique (2), attachée au collier par une pièce dorsale (4), les ceintures thoracique et ventrales étant conçues pour être reliées à une ceinture de sécurité (14, 16) du véhicule.

## Description

### Domaine de l'invention

L'invention se rapporte à la sécurité des animaux dans les véhicules, spécialement les voitures automobiles.

Elle concerne plus particulièrement un harnais de sécurité pour un animal quadrupède, destiné à retenir l'animal attaché sur un siège d'un véhicule, en vue de garantir sa sécurité.

### Etat de la technique

Le transport des animaux domestiques ou de compagnie dans des voitures automobiles, notamment les chiens et les chats, est généralement réalisé sans sécurité. La plupart du temps, ils sont laissés en liberté sur la banquette arrière de la voiture. Il en résulte un risque évident pour l'animal, si la voiture subit un choc violent ou une décélération rapide, notamment en cas de collision avec un obstacle fixe ou avec un autre véhicule ou en cas de ralentissement brutal et inopiné pour éviter un obstacle. Il peut aussi en résulter un risque pour les usagers de la voiture, au cas où l'animal serait projeté sur eux sous l'effet du ralentissement de la voiture.

On a certes songé à interposer un filet ou un grillage entre l'animal et les passagers situés à l'avant de la voiture, mais cette solution a peu d'effet sur la sécurité de l'animal.

Dans le document FR-A-2 603 537, on propose un dispositif pour attacher un animal domestique (chien ou chat) sur la banquette arrière d'une voiture automobile, ce dispositif comprenant une sangle de toile dont une extrémité est munie de l'élément mâle destiné à être engagé dans l'élément femelle correspondant de la ceinture de sécurité de la voiture automobile. A son autre extrémité, la sangle porte un mousqueton pour sa fixation au collier de l'animal.

Ce dispositif connu vise à limiter les mouvements et le déplacement de l'animal dans l'habitacle de la voiture automobile et il renforce ainsi la sécurité des autres passagers. Il n'empêche toutefois pas que l'animal soit projeté vers l'avant, l'arrière ou latéralement si le voiture subit un choc violent ou une décélération rapide et subisse alors des lésions corporelles graves.

### Résumé de l'invention

L'invention vise à remédier aux inconvénients du dispositif connu décrit plus haut, en fournissant un moyen nouveau pour attacher un animal dans un véhicule, qui retient l'animal dans le véhicule et qui garantit la sécurité des autres usagers ainsi que celle de l'animal.

L'invention concerne plus particulièrement un harnais d'une conception nouvelle, qui est destiné à coopérer avec une ceinture de sécurité d'une voiture automobile, pour retenir fermement l'animal sur le siège de la voiture en cas de collision, tout en lui permettant de se mouvoir dans certaines limites, pendant la marche normale de la voiture.

En conséquence, l'invention concerne un harnais de sécurité pour un animal quadrupède dans un véhicule muni d'une ceinture de sécurité, ledit harnais se caractérisant en ce qu'il comprend un collier, une ceinture ventrale et une ceinture thoracique qui est attachée au collier par une pièce dorsale et en ce que les ceintures thoracique et ventrales sont conçues pour être reliées à une ceinture de sécurité du véhicule.

Dans le harnais selon l'invention, le collier est destiné à être appliqué autour du cou de l'animal. Il peut être muni d'un fermoir, bien que cela ne soit pas indispensable. Le collier peut être rigide ou souple. Il peut être en métal, en cuir ou en tissu. En variante, il peut être en une matière élastique. On préfère utiliser un collier souple, par exemple en tissu.

La ceinture ventrale désigne une ceinture qui est normalement appliquée sur le ventre ou l'abdomen de l'animal et sur son dos. La ceinture ventrale peut être formée d'un ou de plusieurs éléments rigides. En variante, elle peut être en une matière souple. Selon une autre variante, elle est réalisée en une matière élastique. Elle peut par exemple être en métal, en cuir, en un polymère de synthèse rigide ou souple ou en tissu. On préfère la réaliser en une matière souple, par exemple en tissu. La ceinture ventrale est normalement munie d'un fermoir. Celui-ci sera explicité plus loin.

La ceinture thoracique désigne une ceinture qui est normalement appliquée sur la poitrine ou le thorax de l'animal et sur son dos. Elle prend normalement appui sur les côtes. Elle peut prendre appui sur le sternum de l'animal ou se situer au-delà de celui-ci, vers l'arrière de l'animal. Elle peut être formée d'un ou de plusieurs éléments rigides. En variante, elle peut être en une matière souple. Selon une autre variante, elle est réalisée en une matière élastique. Elle peut par exemple être en métal, en cuir, en un polymère de synthèse rigide ou souple, en élastomère ou en tissu. On préfère la réaliser en une matière souple, par exemple en tissu. La ceinture thoracique est normalement munie d'un fermoir. Celui-ci sera explicité plus loin.

La pièce dorsale sert à solidariser le collier à la ceinture thoracique. Lorsque le harnais est attaché à l'animal, ladite pièce dorsale est normalement appliquée sur le dos de l'animal, en arrière de son cou, sensiblement à l'aplomb du sternum, lorsque l'animal se tient debout sur ses quatre pattes. La pièce dorsale peut être rigide ou souple. En variante, elle peut être réalisée en une matière élastique. On la réalise avantageusement en cuir.

Les dimensions respectives du collier, de la ceinture thoracique, de la ceinture ventrale et de la pièce dorsale dépendent de l'animal auquel le harnais est destiné. Elles doivent par conséquent être déterminées dans chaque cas particulier par un homme du métier.

Comme il a été exposé plus haut, la ceinture thoracique et la ceinture ventrale du harnais selon l'invention sont normalement munies d'un fermoir. Tout fermoir susceptible de réaliser une fermeture efficace des ceintures ventrale et thoracique peut convenir. Le choix du type le plus adéquat de fermoir va dès lors dépendre de l'animal à qui le harnais est destiné et il doit être déterminé dans chaque cas particulier par l'homme du métier. Pour une question de sécurité, on recommande d'utiliser des fermoirs dont l'ouverture peut être réalisée facilement et rapidement.
A cet effet, dans une première forme de réalisation, on utilise des fermetures Velcro® (Velcro Industries B.V.). Les fermetures Velcro sont bien connues en technique. Elles comprennent une paire de rubans tissés qui s'agrippent sous l'action d'une pression.
Dans une autre forme de réalisation de l'invention, les fermoirs comprennent des fermetures éclair® (Eclair Prym France S.A.).
Dans une forme de réalisation préférée de l'invention, les fermoirs comprennent une boucle de fermeture, du type de celles qui équipent habituellement les ceintures de sécurité des voitures automobiles ou les ceintures de sécurité des sièges destinés aux enfants en bas âge dans les voitures automobiles. La boucle de fermeture conforme à cette forme de réalisation du harnais selon l'invention comprend normalement un élément mâle fixé à une extrémité de la ceinture (ventrale ou thoracique) du harnais et un élément femelle correspondant, fixé à l'autre extrémité de cette ceinture.

Conformément à l'invention, la ceinture thoracique du harnais et sa ceinture ventrale sont conçues pour être reliées à une ceinture de sécurité du véhicule. Les ceintures de sécurités des véhicules sont bien connues en technique et couramment utilisées dans les véhicules servant au transport de personnes, tels que les voitures automobiles, les avions et les bateaux. Elles comprennent normalement deux sangles, qui sont attachées fermement à la structure du véhicule et qui peuvent être attachées l'une à l'autre au moyen d'une boucle appropriée. Les ceintures de sécurité peuvent être du type à deux points de fixation ou du type à trois point de fixation. Dans les ceintures de sécurité du type à deux points de fixation, chaque sangle susdite de la ceinture a une de ses extrémités fixée à la structure du véhicule et elle est munie d'un élément de la boucle de fermeture à son autre extrémité. Dans les ceintures de sécurité du type à trois points de fixation, une des sangles est fixée à la structure du véhicule à une extrémité et elle est munie d'un élément de la boucle de fermeture à son autre extrémité. L'autre sangle a ses deux extrémités fixées à la structure du véhicule et elle en outre munie de l'élément complémentaire de fermeture de la boucle, cet élément complémentaire pouvant coulisser librement le long de la sangle entre ses deux extrémités. Les ceintures de sécurité du type à trois points de fixation sont bien connues en technique de prévention routière et couramment utilisées dans les voitures automobiles.

La liaison du harnais à la ceinture de sécurité du véhicule doit être escamotable. On peut à cet effet utiliser tout moyen connu approprié pour attacher deux sangles de manière amovible. Un moyen qui convient bien comprend un coulissement d'une au moins des sangles précitées de la ceinture de sécurité du véhicule entre le corps de l'animal et les ceintures thoracique et ventrale du harnais.
Dans une forme de réalisation avantageuse du harnais selon l'invention, la ceinture thoracique et/ou la ceinture ventrale est munie d'au moins un oeillet pour le passage d'une des sangles précitées de la ceinture de sécurité du véhicule.

Le harnais selon l'invention est spécialement bien adapté aux ceintures de sécurité du type à trois points de fixation, définies plus haut. A cet effet, dans une forme de réalisation spécialement avantageuse de l'invention, appliquée à une ceinture de sécurité du type à trois points de fixation, on relie les ceintures thoracique et ventrale du harnais à la sangle de la ceinture de sécurité, dont les deux extrémités sont attachées à la structure du véhicule. Dans une variante préférée de cette forme de réalisation de l'invention, ladite sangle de la ceinture de sécurité a une extrémité fixée au plancher du véhicule et elle a son autre extrémité fixée au toit du véhicule. Dans cette variante préférée de l'invention, le véhicule est avantageusement un véhicule routier, spécialement une voiture automobile.

Conformément à l'invention, après avoir fixé le harnais à l'animal, on relie les ceintures thoracique et ventrale du harnais à l'une des sangles de la ceinture de sécurité du véhicule et on accouple les deux éléments de la boucle de fermeture de la ceinture de sécurité.

Selon une forme de réalisation préférée de l'invention, la liaison de la ceinture de sécurité du véhicule aux ceintures thoracique et ventrale du harnais est agencée pour permettre un coulissement de la ceinture de sécurité du véhicule sur le harnais. A cet effet, la ceinture ventrale du harnais est munie d'un oeillet pour le passage de la ceinture de sécurité du véhicule. Dans cette forme de réalisation de l'invention, la position de l'oeillet est de préférence réglée de manière à se trouver sur le flanc de l'animal lorsque le harnais est fixé à celui-ci. Dans une variante avantageuse de cette forme de réalisation particulière de l'invention, la ceinture ventrale du harnais est munie de deux oeillets qui sont situés respectivement sur les deux flancs de l'animal.

Dans une autre forme de réalisation de l'invention, la ceinture thoracique du harnais est munie d'au moins un oeillet pour le passage de la ceinture de sécurité du véhicule.

Dans une forme de réalisation particulière additionnelle de l'invention, la ceinture thoracique et la ceinture ventrale du harnais sont munies chacune d'au moins un oeillet pour le passage d'au moins une sangle de la ceinture de sécurité du véhicule.

Dans une forme de réalisation particulière supplémentaire du harnais selon l'invention, une bande thoracique relie le collier à la ceinture thoracique. Dans cette forme de réalisation de l'invention, la bande thoracique désigne une bande destinée à passer entre les deux pattes antérieures de l'animal et à recouvrir le sternum, entre le collier et la ceinture thoracique du harnais. Cette bande thoracique est de préférence réalisée en une matière souple, par exemple en tissu. Elle renforce la fixation du harnais au corps de l'animal.

L'invention s'applique à tout animal quadrupède susceptible d'être transporté, vivant et en bonne santé, dans un véhicule. Elle s'applique indifféremment aux animaux sauvages capturés et aux animaux domestiques. Elle s'applique indifféremment à des animaux de grande taille ou à des animaux de taille réduite.

Le véhicule auquel s'applique l'invention n'est pas critique et peut comprendre indifféremment un véhicule routier, un bateau, un navire ou une péniche ou encore un aéroplane.

L'invention s'applique spécialement bien au transport d'animaux domestiques dans des véhicules roulants (spécialement des véhicules routiers), notamment des chevaux dans des camions ou des remorques hippiques.

L'invention trouve une application spécialement avantageuse pour le transport d'animaux de compagnie, spécialement des chiens ou des chats, dans des voitures automobiles normalement équipées de ceintures de sécurité conformes au normes de la sécurité routière.

L'invention concerne dès lors également un procédé pour attacher un animal de compagnie quadrupède sur un siège d'une voiture automobile munie d'une ceinture de sécurité, ladite ceinture de sécurité étant du type à trois points de fixation et comprenant une sangle fixée au plancher du véhicule et une autre sangle dont les extrémités sont fixées respectivement au plancher et au toit du véhicule et qui est munie d'une fermeture coulissante entre lesdites extrémités, le procédé se caractérisant en ce qu'on fixe à l'animal un harnais conforme à l'invention, on fait passer la fermeture et ladite autre sangle de la ceinture de sécurité dans un oeillet de la ceinture ventrale du harnais et on fait passer sous la ceinture thoracique du harnais, la partie de ladite autre sangle, qui est située entre la fermeture et son extrémité fixée au toit du véhicule.

Dans le procédé selon l'invention, le siège du véhicule peut être indifféremment un siège situé à l'avant de la voiture automobile ou une banquette située à l'arrière de celle-ci.

### Brève description des figures

Des particularités et détails de l'invention vont apparaître au cours de la description suivante des figures annexées, qui représentent quelques formes de réalisation particulière de l'invention.
La figure 1 montre une forme de réalisation particulière du harnais selon l'invention, en position ouverte ;
La figure 2 montre en perspective une variante d'exécution du harnais de la figure 1, en position fermée et relié à une ceinture de sécurité d'une voiture automobile ;
Les figures 3, 4, 5 et 6 montrent un chien équipé du harnais de la figure 2, sur la banquette arrière d'une voiture automobile.

Dans ces figures des mêmes numéros de référence désignent des éléments identiques.

### Description détaillée de modes de réalisation particuliers

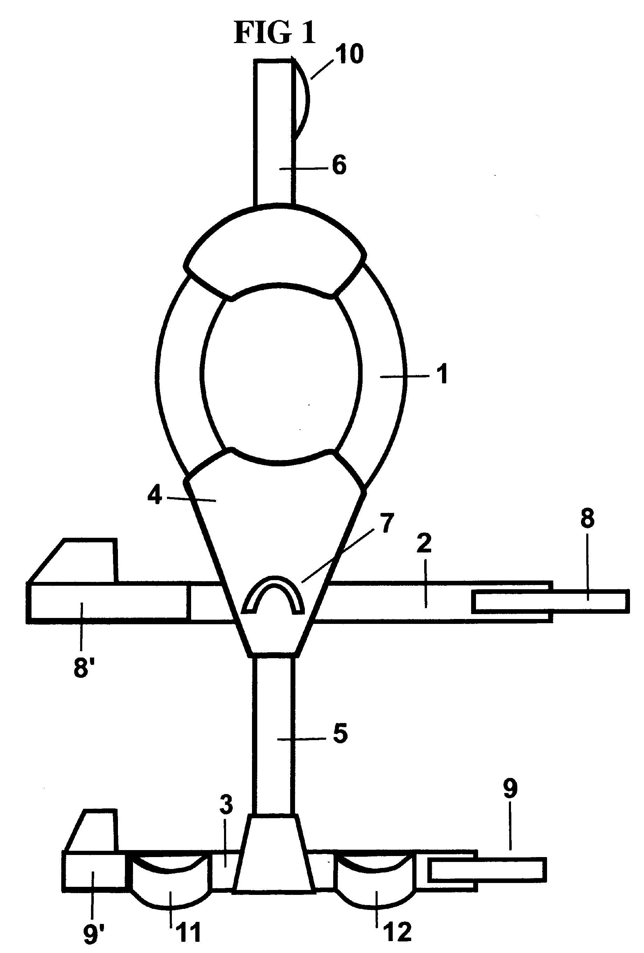

Le harnais représenté à la figure 1 est spécialement destiné à un chien. Il comprend un collier 1, une ceinture thoracique 2 et une ceinture ventrale 3. La ceinture thoracique 2 est attachée au collier par une pièce dorsale 4 et une bande dorsale 5 relie la pièce 4 à la ceinture ventrale 3. Une bande thoracique 6 est attachée en avant du collier 1. Elle est pourvue d'un oeillet 10 à son extrémité libre. Le collier 1, la ceinture thoracique 2, la ceinture ventrale 3, la bande dorsale 5 et la bande thoracique 6 sont en tissu. La pièce dorsale 4 est en cuir. Elle porte un anneau métallique 7 pour fixer le mousqueton d'une laisse (non représentée). Deux oeillets 11 et 12 sont fixés à la ceinture ventrale 3, de part et d'autre de sa connexion à la bande dorsale 5.

Pour fixer le harnais au corps d'un chien, on engage la tête du chien à travers le collier 1, en posant la pièce dorsale 4 sur le dos de l'animal, approximativement à hauteur de ses pattes antérieures. On tend la bande thoracique 6 sous le thorax de l'animal, on engage une extrémité de la ceinture thoracique 2 dans l'oeillet 10 et on referme ensuite la ceinture thoracique 2 sur le thorax du chien au moyen d'une fermeture Velcro 8, 8' prévue à ses extrémités. On positionne ensuite la ceinture ventrale 3 de manière à tendre la bande dorsale 5 sur l'épine dorsale du chien, puis on la referme sur le ventre de l'animal au moyen d'une fermeture Velcro 9, 9' prévue à ses extrémités.

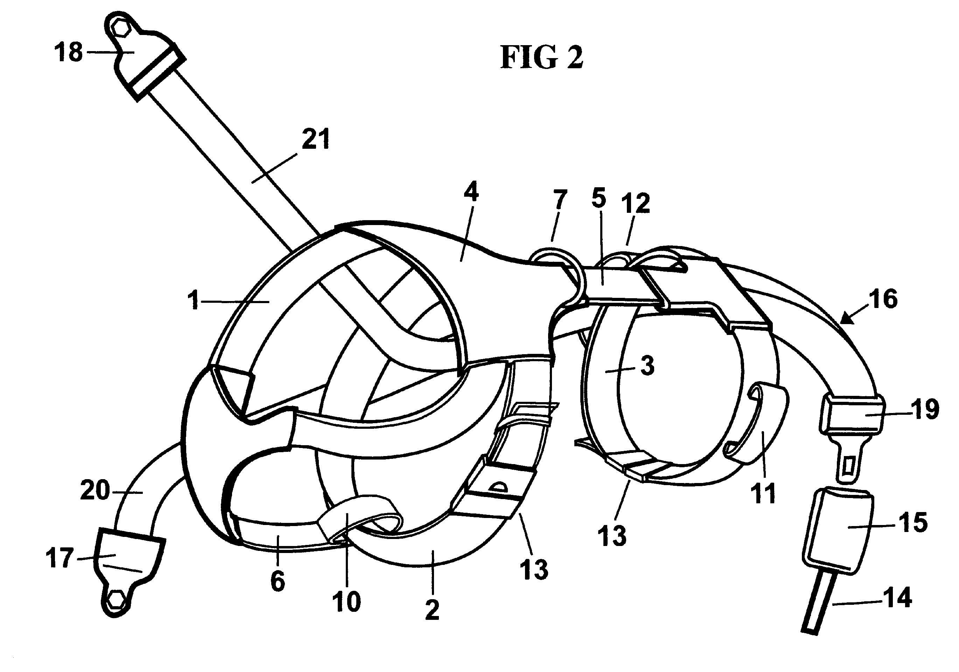

La figure 2 montre le harnais en position de fermeture sur le corps d'un animal. Par raison de clarté, on a omis de représenter l'animal. Le harnais de la figure 2 diffère de celui de la figure 1 par les fermoirs des ceintures thoracique et ventral. A la figure 2, ces fermoirs comprennent des boucles de fermeture 13, du type de celles équipant normalement les ceintures de sécurité normalisées des voitures automobiles. Le harnais de la figure 2 est associé à une ceinture de sécurité d'une voiture automobile. Cette ceinture de sécurité est du type à trois points de fixation. Elle comprend une sangle 14 dont une extrémité (non représentée) est fixée au plancher de la voiture et dont l'autre extrémité est équipée de l'élément femelle 15 d'une boucle de fermeture. La ceinture de sécurité comprend une autre sangle 16 dont une extrémité 17 est fixée au plancher de la voiture automobile et dont l'autre extrémité 18 est fixée au toit de la voiture. L'élément mâle 19 de la boucle de fermeture de la ceinture de sécurité coulisse librement le long de la sangle 16, entre ses deux extrémités 17 et 18. Il divise ainsi la sangle 16 en deux brins 20 et 21, le brin 20 comprenant l'extrémité inférieure 17 de ladite sangle 16 et le brin 21 comprenant son extrémité supérieure 18. Pour lier le harnais à la ceinture de sécurité de la voiture, on fait passer le brin 21 de la sangle 16 sous la ceinture thoracique 2, au contact du corps de l'animal (ce qui nécessite d'ouvrir momentanément la boucle de fermeture 13 de la ceinture 2). On engage ensuite l'élément de fermeture mâle 19 à travers l'oeillet 12 de la ceinture ventrale 3, on tire sur les deux brins 20 et 21 pour les faire passer à travers l'oeillet 12 et on insère l'élément de fermeture mâle 19 dans l'élément de fermeture femelle 15 de la sangle 14.

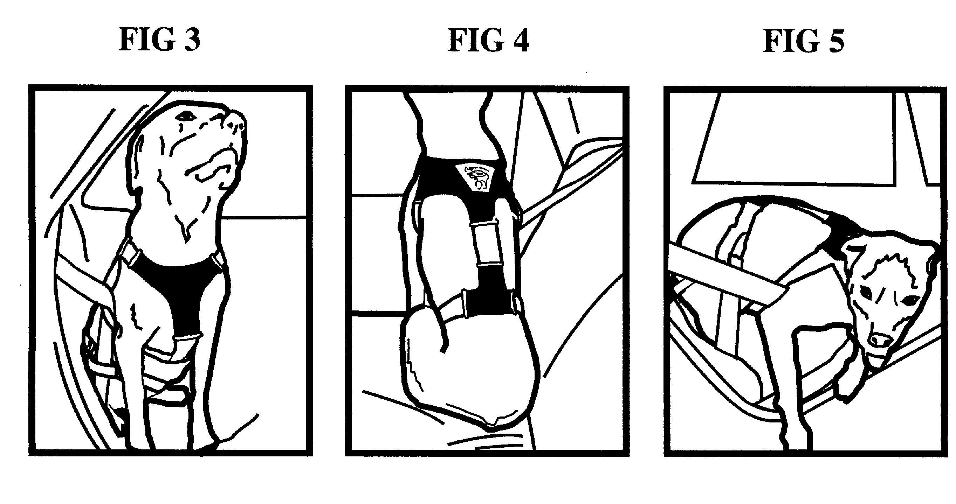

Les figures 3, 4 et 5 montrent le chien sur la banquette arrière de la voiture automobile, le chien étant muni de son harnais et celui-ci étant relié à la ceinture de sécurité de la voiture automobile. On observe que le chien peut se mouvoir facilement sur la banquette de la voiture, tant que la voiture est à l'arrêt ou roule normalement sans subir de chocs, d'accélérations ou de décélérations violents. Dès que la voiture subit un choc, une accélération ou.une décélération qui dépasse une limite prédéfinie, la ceinture est bloquée de manière bien connue en soi et le chien est immobilisé sur la banquette de la voiture. La fixation de la ceinture de sécurité de la voiture au harnais du chien de la manière exposée plus haut évite que l'animal soit projeté en avant ou latéralement ou pivote sur lui-même, au cas où la voiture subirait une décélération brutale, par exemple sous l'effet d'une collision avec un obstacle fixe ou un autre véhicule.

## Revendications

1. Harnais de sécurité pour un animal quadrupède dans un véhicule muni d'une ceinture de sécurité, **caractérisé en ce qu'**il comprend un collier (1), une ceinture ventrale (3) et une ceinture thoracique (2) qui est attachée au collier par une pièce dorsale (4), et **en ce que** les ceintures thoracique et ventrales sont conçues pour être reliées à la ceinture de sécurité (14,16) du véhicule.

2. Harnais selon la revendication 1, **caractérisé en ce que** la ceinture ventrale (3) est munie d'au moins un oeillet (11, 12) pour le passage de la ceinture de sécurité.

3. Harnais selon la revendication 1 ou 2, **caractérisé en ce qu'**une bande thoracique (6) relie le collier à la ceinture thoracique.

4. Harnais selon l'une quelconque des revendications 1 à 3, **caractérisé en ce que** la ceinture thoracique et/ou la ceinture ventrale est munie d'un fermoir (8-8', 9-9', 13).

5. Harnais selon la revendication 4, **caractérisé en ce que** le fermoir comprend une fermeture Velcro® (8-8', 9-9').

6. Harnais selon la revendication 4, **caractérisé en ce que** le fermoir comprend une boucle de fermeture (13).

7. Harnais selon l'une quelconque des revendications 1 à 6, **caractérisé en ce que** la ceinture thoracique, la ceinture ventrale et le collier sont en tissu.

8. Harnais selon l'une quelconque des revendications 1 à 7, **caractérisé en ce que** le véhicule est une voiture automobile.

9. Harnais selon l'une quelconque des revendications 1 à 8, **caractérisé en ce que** l'animal est un chien.

10. Procédé pour attacher un animal de compagnie quadrupède sur un siège d'une voiture automobile munie d'une ceinture de sécurité, ladite ceinture de sécurité étant du type à trois points de fixation et comprenant une sangle (14) fixée au plancher du véhicule et une autre sangle (16) dont les extrémités (17, 18) sont fixées respectivement au plancher et au toit du véhicule et qui est munie d'une fermeture (19) coulissant entre lesdites extrémités, **caractérisé en ce qu'**on fixe un harnais conforme à la revendication 2 à l'animal, on fait passer la fermeture (19) et ladite autre sangle (16) de la ceinture de sécurité dans l'oeillet (12) de la ceinture ventrale (3) du harnais et on fait passer sous la ceinture thoracique (2) du harnais, la partie (21) de ladite autre sangle (16), qui est située entre la fermeture (19) et son extrémité (18) fixée au toit du véhicule.
